(19) Europäisches Patentamt
European Patent Office
Office européen des brevets

(11) **EP 4 131 619 A1**

(12) **EUROPEAN PATENT APPLICATION**
published in accordance with Art. 153(4) EPC

(43) Date of publication:
**08.02.2023 Bulletin 2023/06**

(21) Application number: **21915853.2**

(22) Date of filing: **29.12.2021**

(51) International Patent Classification (IPC):
*H01M 50/403* (2021.01)   *H01M 50/46* (2021.01)
*H01M 50/426* (2021.01)   *H01M 10/052* (2010.01)

(52) Cooperative Patent Classification (CPC):
**H01M 10/052; H01M 50/403; H01M 50/426; H01M 50/46**

(86) International application number:
**PCT/KR2021/020226**

(87) International publication number:
**WO 2022/146056 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 KR 20200185814**

(71) Applicant: **LG Energy Solution, Ltd.**
**Seoul 07335 (KR)**

(72) Inventors:
• **LEE, Seung-Hyun**
  **Daejeon 34122 (KR)**
• **KA, Kyung-Ryun**
  **Daejeon 34122 (KR)**
• **KWON, Hye-Jin**
  **Daejeon 34122 (KR)**

(74) Representative: **Hoffmann Eitle**
**Patent- und Rechtsanwälte PartmbB**
**Arabellastraße 30**
**81925 München (DE)**

(54) **PREPARATION METHOD FOR SEPARATOR FOR ELECTROCHEMICAL DEVICE AND SEPARATOR FOR ELECTROCHEMICAL DEVICE PREPARED BY SAME PREPARATION METHOD**

(57)     Disclosed is a separator for an electrochemical device. The separator has an electrode adhesive layer, and two types of solvents are used when coating the electrode adhesive layer, wherein the ratio of polarity of the solvents is used to induce a beta crystal phase of the second binder resin, and thus a uniform porous structure is formed to provide an improved lithium-ion conduction path. In this manner, even when the adhesive layer is formed on the separator, the separator does not cause an increase in resistance.

FIG. 1

EP 4 131 619 A1

**Description**

TECHNICAL FIELD

The present application claims priority to Korean Patent Application No. 10-2020-0185814 filed on December 29, 2020 in the Republic of Korea. The present disclosure relates to a separator for an electrochemical device. Particularly, the present disclosure relates to a separator for an electrochemical device which has an electrode adhesive layer on one surface or both surfaces as the outermost layer of the separator to realize improved stability and durability and to provide improved binding force to an electrode. The present disclosure also relates to an electrochemical device including the separator.

BACKGROUND ART

A lithium secondary battery is an energy storage device which has a fundamental structure of positive electrode/negative electrode/separator/electrolyte, and is an energy storage device which can be charged/discharged through reversible conversion between chemical energy and electrical energy and shows high energy density. Such lithium secondary batteries are used widely for compact electronic devices, such as cellular phones, notebook computers, or the like. Recently, application of lithium secondary batteries has been extended rapidly to hybrid electric vehicles (HEVs), plug-in electric vehicles (plug-in EVs), electric bikes (e-bikes) and energy storage systems (ESSs) as a countermeasure to environmental problems, high oil price, energy efficiency and energy storage.

In the manufacture and use of such a secondary battery, securement of the safety thereof is a very important problem to be solved. Particularly, a separator used conventionally as a separator for an electrochemical device shows a severe heat shrinking behavior at high temperature due to its material properties and characteristics during its manufacturing process, thereby causing a safety-related problem, such as an internal short circuit. To ensure the safety of the secondary battery, there has been suggested an organic-inorganic composite porous separator including a porous inorganic coating layer formed by coating a mixture of inorganic particles with a binder resin onto a porous substrate for a separator for a secondary battery (see, Korean Patent Application No. 10-2004-0070096). However, when forming an electrode assembly by laminating electrodes with a separator, it is highly likely that the electrodes and the separator are separated from each other due to the insufficient interlayer binding force. Moreover, in this case, there is a problem in that the inorganic particles detached during the separation may function as local defects in a device.

To solve the above-mentioned problem, Korean Patent Laid-Open No. 10-2006-0116043 discloses a method for forming a porous adhesive layer through a phase separation effect by adding ethanol to a solution containing PVDF dissolved in a good solvent, such as acetone, and applying the resultant mixture onto a separator, followed by drying. The porous adhesive layer obtained by the method has some advantages, such as high infiltration property and low resistance upon the operation of a battery, but is swelled after the injection of an electrolyte during the manufacture of a battery to cause degradation of the binding force with the separator (i.e. mechanical strength) and shows low cycling characteristics. In addition, the porous adhesive layer causes interlayer mixing with the porous inorganic coating layer, and thus causes the problems of blocking of the pores formed in the porous inorganic coating layer and degradation of the air permeability and resistance characteristics of the separator.

Under these circumstances, there is a need for developing a separator having an electrode adhesive layer, while preventing degradation of resistance characteristics.

DISCLOSURE

Technical Problem

The present disclosure is designed to solve the problems of the related art, and therefore the present disclosure is directed to providing a separator for an electrochemical device having an electrode adhesive layer disposed on the surface thereof. The present disclosure is also directed to providing a method for manufacturing a separator which causes no degradation of the air permeability and ion conductivity and shows high interfacial resistance between an electrode and the separator, even though the electrode adhesive layer is disposed. It will be easily understood that the objects and advantages of the present disclosure may be realized by the means shown in the appended claims and combinations thereof.

Technical Solution

According to the first embodiment of the present disclosure, there is provided a method for manufacturing a composite separator having an electrode adhesive layer for an electrochemical device, including a step of applying a polymer solution for an electrode adhesive layer to at least one surface of a separator substrate layer, followed by drying, wherein the polymer solution includes a binder resin for an electrode adhesive layer and a mixed solvent, the binder resin for an electrode adhesive layer includes a fluorine-based binder resin, the mixed solvent includes a first solvent and a second solvent, the ratio of the polarity of the first solvent to the polarity of the second solvent (polarity of the first solvent/polarity of the second solvent) is 0.360 or more, and each of the polarity of the first solvent and the polarity of the second solvent independently follows the Dimroth-Reichardt ET30 polarity scale.

According to the second embodiment of the present disclosure, there is provided the method as defined in the first embodiment, wherein each of the polarity of the first solvent and the polarity of the second solvent is an $E_T^N$ value independently calculated from the following Formula 1 and Formula 2:

[Formula 1]

$$E_T(A) = 28,592 / \lambda_{max}$$

[Formula 2]

$$E_T^N = [E_T(A) - E_T(TMS)] / [E_T(H_2O) - E_T(TMS)]$$

wherein $E_T(A)$ is expressed in the unit of kcal/mol, $E_T(H_2O)$ is 63.1 kcal/mol, and $E_T(TMS)$ is 30.7 kcal/mol.

According to the third embodiment of the present disclosure, there is provided the method as defined in the first or the second embodiment, wherein the first solvent includes any one selected from acetone, THF, DMF and NMP, or a mixture of two or more of them, and the second solvent includes any one selected from a C1-C3 lower alcohol and $H_2O$, or a mixture of two or more of them.

According to the fourth embodiment of the present disclosure, there is provided the method as defined in any one of the first to the third embodiments, wherein the ratio of the polarity of the first solvent to the polarity of the second solvent is 0.360-0.450.

According to the fifth embodiment of the present disclosure, there is provided the method as defined in any one of the first to the fourth embodiments, wherein the fluorine-based binder resin is present in an amount of 90 wt% or more based on 100 wt% of the binder resin for an electrode adhesive layer.

According to the sixth embodiment of the present disclosure, there is provided the method as defined in any one of the first to the fifth embodiments, wherein the fluorine-based binder resin includes vinylidene fluoride homopolymer (polyvinylidene fluoride), copolymer of vinylidene fluoride with a copolymerizable monomer, or a mixture thereof.

According to the seventh embodiment of the present disclosure, there is provided the method as defined in any one of the first to the sixth embodiments, wherein the copolymer of vinylidene fluoride with a copolymerizable monomer is at least one selected from polyvinylidene fluoride-co-hexafluoropropylene, polyvinylidene fluoride-co-trichloroethylene, polyvinylidene fluoride-co-tetrafluoroethylene and polyvinylidene fluoride-co-trifluoroethylene.

According to the eighth embodiment of the present disclosure, there is provided the method as defined in any one of the first to the seventh embodiments, wherein the copolymer of vinylidene fluoride with a copolymerizable monomer has a degree of substitution with the copolymerizable monomer of 5-20 wt%.

According to the ninth embodiment of the present disclosure, there is provides a separator for an electrochemical device, which includes an electrode adhesive layer, wherein the fluorine-based binder in the electrode adhesive layer has a crystallization degree of 40% or more and a content of beta crystals of 80% or more, and is obtained by the method as defined in any one of the first to the eighth embodiments.

According to the tenth embodiment of the present disclosure, there is provided a lithium-ion battery including a separator for an electrochemical device, wherein the electrochemical device includes a negative electrode, a positive electrode and a separator interposed between the negative electrode and the positive electrode, and the separator is the same as defined in the ninth embodiment.

Advantageous Effects

According to the present disclosure, two types of solvents are used when coating the electrode adhesive layer, wherein the ratio of polarity of the solvents is used to induce a beta crystal phase of the second binder resin, and thus a uniform porous structure is formed to provide an improved lithium-ion conduction path. In this manner, even when the electrode adhesive layer is formed on the separator, the separator does not cause an increase in resistance.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a graph illustrating the distribution of a beta crystal phase in the electrode adhesive layer of the separator according to each of Example 1 and Comparative Example 1.
FIGS. 2a and 2b illustrate scanning electron microscopic (SEM) images of the surface of the separator obtained from Example 1.
FIG. 3 illustrates an SEM image of the surface of the separator obtained from Comparative Example 1.
FIG. 4 illustrates an SEM image of the surface of the separator obtained from Comparative Example 3.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The present disclosure relates to a method for manufacturing a composite separator for an electrochemical device having an electrode adhesive layer as the outermost layer. The present disclosure also relates to a composite separator obtained by the method.

According to an embodiment of the present disclosure, the composite separator includes a separator substrate layer and an electrode adhesive layer formed on at least one surface of the separator substrate layer. As used herein, the separator substrate layer refers to a porous ion-conducting barrier used for separating a negative electrode and a positive electrode from each other in an electrochemical device, and the composite separator refers to a separator for an electrochemical device having an electrode adhesive layer formed on at least one surface of the separator substrate layer.

The separator substrate layer forms the rest of the separator except for the electrode adhesive layer, and functions as a general separator allowing ions to pass therethrough, while interrupting an electrical contact between a negative electrode and a positive electrode. According to an embodiment of the present disclosure, the separator substrate layer may include a porous polymer substrate (A) having a plurality of micropores and/or a porous inorganic coating layer (B) including a plurality of inorganic particles. According to an embodiment of the present disclosure, the separator substrate layer includes both the porous polymer substrate and the porous inorganic coating layer, wherein at least one surface or both surfaces of the porous polymer substrate may be coated with the porous inorganic coating layer.

According to an embodiment of the present disclosure, the porous polymer substrate can provide a lithium-ion channel, while insulating the negative electrode and the positive electrode electrically from each other to prevent a short-circuit. Any porous polymer substrate may be used with no particular limitation, as long as it may be used conventionally as a separator for an electrochemical device. Particular examples of the porous polymer substrate include porous substrates made of at least one polymer resin selected from polyolefin, polyethylene terephthalate, polybutylene terephthalate, polyacetal, polyamide, polycarbonate, polyimide, polyetherether ketone, polyether sulfone, polyphenylene oxide, polyphenylene sulfide and polyethylene naphthalene, but the scope of the present disclosure is not limited thereto.

In addition, the porous polymer substrate may include a sheet-like film formed by melting a polymer resin or a non-woven web formed by integrating filaments obtained by melt-spinning of a polymer resin. Preferably, the porous polymer substrate is a sheet-like porous substrate obtained by melting/molding such a polymer resin.

Particularly, the porous polymer substrate may include any one of the following a) to e):

a) A porous film formed by melting/extruding a polymer resin;
b) A multilayer film formed by stacking two or more layers of the porous films of a);
c) A non-woven web formed by integrating filaments obtained by melting/spinning a polymer resin;
d) A multilayer film formed by stacking two or more layers of the non-woven webs of c); and
e) A porous composite film having a multilayer structure including two or more of a) to d).

According to the present disclosure, the porous polymer substrate may have a thickness of 5-50 $\mu$m. The thickness of the porous polymer substrate is not particularly limited to the above-defined range. However, when the thickness is smaller than the above-defined lower limit, mechanical properties are degraded, and thus the separator may be damaged easily during the use of a battery. Meanwhile, the size of pores present in the porous substrate and porosity are not particularly limited, but may be 0.01-50 $\mu$m and 10-95%, respectively.

The porous inorganic coating layer includes a mixture of plurality of inorganic particles and a binder resin. The surface of the porous polymer substrate is coated with the inorganic particles, and thus the separator substrate layer may have improved heat resistance and mechanical properties.

The porous inorganic coating layer not only has a microporous structure derived from the interstitial volumes among the inorganic particles but also functions as a kind of spacer capable of retaining the physical shape of the coating layer. The interstitial volume means a space defined by the adjacent inorganic particles that are substantially in contact with one another. In addition, the inorganic particles generally do not undergo a change in physical properties even at a high temperature of 200°C or higher, and thus the composite separator shows excellent heat resistance by virtue of the porous inorganic coating layer. According to an embodiment of the present disclosure, the porous inorganic coating layer has a thickness of 1-50 $\mu$m, 2-30 $\mu$m, or 2-20 $\mu$m.

The porous inorganic coating layer may be formed by dispersing a binder resin in a suitable aqueous solvent, such as water, to prepare an aqueous dispersion, introducing inorganic particles thereto to prepare a slurry, and coating the slurry onto at least one surface of the porous polymer substrate. The slurry may be coated by using dip coating, die coating, roll coating, comma coating or a combination thereof.

In the porous inorganic coating layer, the weight ratio of the inorganic particles to the binder resin is determined considering the thickness, pore size and porosity of the finished porous inorganic coating layer, wherein the content of the inorganic particles may be 50-99.9 wt% or 70-99.5 wt%, and that of the polymer resin may be 0.1-50 wt% or 0.5-30 wt%. When the content of the inorganic particles is less than 50 wt%, the content of the polymer resin is excessively high to cause a decrease in vacant spaces formed among the inorganic particles and a decrease in pore size and porosity, resulting in degradation of the performance of the finished battery. On the other hand, when the content of the inorganic particles is larger than 99.9 wt%, the content of the polymer resin is excessively low to cause a decrease in adhesion among the inorganic particles, resulting in degradation of the mechanical properties of the finished porous inorganic coating layer.

According to an embodiment of the present disclosure, there is no particular limitation in the size of the inorganic particles of the porous inorganic coating layer. However, the inorganic particles may have a size of 0.001-10 $\mu$m with a view to formation of a coating layer having a uniform thickness and suitable porosity. When the size of the inorganic particles satisfies the above-defined range, the inorganic particles retain dispersibility to facilitate controlling the physical properties of the composite separator. In addition, it is possible to avoid an increase in thickness of the porous inorganic coating layer and to improve mechanical properties, and it is possible to reduce a possibility of internal short-circuit generated inside of a battery caused by an excessively large pore size during the charge/discharge of the battery.

There is no particular limitation in the inorganic particles, as long as they are electrochemically stable. In other words, there is no particular limitation in the inorganic particles that may be used herein, as long as they cause no oxidation and/or reduction in the range (e.g. 0-5V based on Li/Li$^+$) of operating voltage of an applicable electrochemical device. Particularly, when using inorganic particles having ion transportability, it is possible to increase the ion conductivity in an electrochemical device and thus to improve the performance of the electrochemical device. In addition, when using inorganic particles having a high dielectric constant as the inorganic particles, it is possible to improve the ion conductivity of an electrolyte by increasing the dissociation degree of an electrolyte salt, such as a lithium salt, in a liquid electrolyte.

For the above-mentioned reasons, the inorganic particles may be high-dielectric constant inorganic particles having a dielectric constant of 5 or more, preferably 10 or more, inorganic particles having lithium-ion transportability, or a mixture thereof. Non-limiting examples of the inorganic particles having a dielectric constant of 5 or more may include $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3PbTiO_3$ (PMN-PT), hafnia ($HfO_2$), $SrTiO_3$, $SnO_2$, $CeO_2$, $MgO$, $NiO$, $CaO$, $ZnO$, $ZrO_2$, $SiO_2$, $Y_2O_3$, $Al_2O_3$, $SiC$ and $TiO_2$, or a mixture thereof. In addition, when using the high-dielectric constant inorganic particles in combination with the inorganic particles having lithium-ion transportability, it is possible to obtain a synergic effect.

Non-limiting examples of the inorganic particles having lithium-ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), such as $14Li_2O-9Al_2O_3-38TiO_2-39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 < y < 2$, $0 < z < 4$), such as $Li_3PO_4$-$Li_2S$-$SiS_2$, and $P_2S_5$-based glass ($Li_xP_yS_z$, $0 < x < 3$, $0 < y < 3$, $0 < z < 7$), such as $LiI$-$Li_2S$-$P_2S_5$, or a mixture thereof.

The binder resin contained in the porous inorganic coating layer may be a polymer resin having a low glass transition temperature (Tg), preferably. A polymer resin having a glass transition temperature ($T_g$) of -200 to 200°C may be used preferably. This is because such a polymer resin can improve the mechanical properties, such as flexibility and elasticity, of the composite separator. The binder resin functions as a binder which stably fixes binding among the inorganic particles, and thus contributes to prevention of degradation of mechanical properties of a separator having a porous coating layer. According to the present disclosure, it is not essentially required for the binder resin to have ion conductivity. However, when using a polymer resin having ion conductivity, it is possible to further improve the performance of an electrochemical device. Therefore, a polymer resin having a dielectric constant as high as possible may be used preferably. Thus, the binder resin preferably has a solubility parameter of 15-45 MPa$^{1/2}$, and more preferably 15-25 MPa$^{1/2}$ or 30-45 MPa$^{1/2}$. Therefore, hydrophilic polymer resins having many polar groups may be used preferably as compared to hydrophobic polymers, such as polyolefins. When the solubility parameter is less than 15 MPa$^{1/2}$ and more than 45 MPa$^{1/2}$, it is difficult for the binder resin to be swelled with a conventional liquid electrolyte for a battery.

Non-limiting examples of the binder resin include, but are not limited to: any one polymer resin selected from the group consisting of polyvinylidene fluoride-co-hexafluoropropylene, polyvinylidene fluoride-co-trichloroethylene, polymethyl methacrylate, polybutyl acrylate, polyacrylonitrile, polyvinyl pyrrolidone, polyvinyl acetate, polyethylene-co-vinyl acetate, polyethylene oxide, polyarylate, cyanoethyl pullulan, cyanoethyl polyvinylalchol, cyanoethyl cellulose, cyanoethyl sucrose, pullulan and carboxymethyl cellulose, or a mixture of two or more of them.

Meanwhile, the pore size and porosity of the porous inorganic coating layer mainly depend on the size of the inorganic particles. For example, when using inorganic particles having a particle diameter of 1 μm or less, the resultant pores also have a size of 1 μm or less. Such a pore structure is filled with an electrolyte injected subsequently, and the electrolyte functions to transport ions. Therefore, the pore size and porosity are important factors affecting the control of ion conductivity of the porous inorganic coating layer. According to the present disclosure, the porous inorganic coating layer preferably has a pore size and porosity of 0.001-10 μm and 5-95%, respectively.

The separator according to the present disclosure may be obtained by preparing the separator substrate layer as described above, and disposing an electrode adhesive layer on the surface thereof. Hereinafter, the method for forming an electrode adhesive layer will be explained.

First, a binder resin for an electrode adhesive layer is introduced to a mixed solvent to prepare a polymer solution (S1). The mixed solvent includes a first solvent and a second solvent.

According to the present disclosure, the binder resin for an electrode adhesive layer includes a fluorine-based binder resin. The fluorine-based binder resin may be present in an amount of 90 wt% or more based on 100 wt% of the binder resin. The fluorine-based binder resin may include vinylidene fluoride homopolymer (polyvinylidene fluoride), copolymer of vinylidene fluoride with a copolymerizable monomer, or a mixture thereof.

According to an embodiment of the present disclosure, the fluorine-based binder resin includes a copolymer of vinylidene fluoride with a copolymerizable monomer. The copolymer may be present in an amount of 50 wt% or more, 70 wt% or more, or 90 wt% or more, based on 100 wt% of the fluorine-based binder resin. Meanwhile, according to an embodiment of the present disclosure, the copolymer may have a degree of substitution with a copolymerizable monomer of 5-20 wt%. According to the present disclosure, the degree of substitution may be determined by solid nuclear magnetic resonance (NMR) analysis.

For example, the solid NMR may be carried out through $^1$H-NMR. For the analysis, the following conditions may be applied:

- Agilent DD2 600 MHz SSNMR/1.6mm T3 MAS HFXY Solid Probe
- 19F NMR (one pulse, D1 = 30, ns = 32, aq = 0.4)
- Spinning rate = 35 kHz

In addition, the degree of substitution may be determined by relative quantitative analysis of $^1$H-NMR spectrum. For example, an instrument, such as Bruker AC 400, may be used for the $^1$H-NMR analysis. As a solvent, deuterated acetone or deuterated DMF may be used. Herein, the coupling constant and chemical shift are provided in the unit of hertz (Hz) and parts per million (ppm), respectively. The following conditions may be applied to the acquisition parameters of the $^1$H-NMR: rotation angle 90°, pulse sequence 2s, scan number 8.

Particular examples of the monomer copolymerizable with vinylidene fluoride include any one selected from tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, perfluoro(1,3-dioxole), perfluoro(2,2-dimethyl-1,3-dioxol), trichloroethylene and vinyl fluoride, or two or more of them. For example, the fluorinated-based binder resin may include any one selected from polyvinylidene fluoride-co-hexafluoropropylene, polyvinylidene fluoride-co-trichloroethylene, polyvinylidene fluoride-co-tetrafluoroethylene and polyvinylidene fluoride-co-trifluoroethylene, or a mixture of two or more of them.

According to an embodiment of the present disclosure, the mixed solvent has a ratio of polarity of the first solvent to the second solvent of 0.360 or more. For example, the ratio of polarity may be 0.360-0.450. Herein, the ratio of polarity means the polarity of the first solvent based on the polarity of the second solvent (polarity of the first solvent/polarity of the second solvent).

Meanwhile, according to the present disclosure, with reference to the calculation of the ratio of polarity, the polarity of the second solvent is relatively higher than that of the first solvent. In other words, the solvent having a relatively lower polarity is taken as the first solvent, and the remaining solvent of the two types of solvents is taken as the second solvent, and then the ratio of polarity is calculated.

In general, the term 'polarity' means an electric dipole moment generated by concentration of electron cloud in one direction, caused by the structural asymmetricity of a molecule having two or more atoms or a difference in electronegativity between the atoms forming the molecule.

According to the present disclosure, the polarity ($E_T^N$) of each solvent follows the Dimroth-Reichardt ET30 polarity scale. According to the Dimroth-Reichardt ET30 polarity scale, the reference material, i.e. 2,6-diphenyl-4-(2,4,6-triphenyl-pyridino)phenoxide, is added to a solvent (A), the polarity of which is to be determined, to obtain a solution, the absorbance value ($\lambda_{max}$) of the solution is measured, and then the value is input to the following Formula 1 and Formula 2 to quantitatively calculate the polarity of each solvent. The absorbance value may be measured by using an UV-Vis spectrophotometer.

[Formula 1]

$$E_T(A) = 28,592 / \lambda_{max}$$

[Formula 2]

$$E_T^N = [E_T(A) - E_T(TMS)] / [E_T(H_2O) - E_T(TMS)]$$

In Formula 2, $E_T(H_2O)$ is a value calculated according to Formula 1 with water taken as a solvent for the reference material and is 63.1 kcal/mol, and $E_T(TMS)$ is a value calculated according to Formula 1 with tetramethylsilane (TMS) taken as a solvent and is 30.7 kcal/mol. In other words, after TMS is taken as a non-polar compound having the lowest polarity and water is taken as a compound having the highest polarity, the polarity of TMS is taken as 0 and the polarity of water is taken as 1, and then the polarity ($E_T^N$) of a solvent, the polarity of which is to be determined, is defined relatively. In other words, the polarity of each solvent may be a relative polarity when the polarity of water is taken as 1. The unit of $E_T(A)$ is kcal/mol.

Each of the first solvent and the second solvent may be independently any one selected from acetone, tetrahydrofuran (THF), dimethylformamide (DMF), N-methyl pyrrolidone (NMP), a C1-C3 lower alcohol and $H_2O$, or a mixture of two or more of them. According to an embodiment of the present disclosure, the first solvent may include any one selected from acetone, THF, DMF and NMP, or a mixture of two or more of them, and the second solvent may include any one selected from a C1-C3 lower alcohol and $H_2O$, or a mixture of two or more of them.

According to an embodiment of the present disclosure, the mixed solvent may be at least one selected from a mixture of DMF with EtOH, a mixture of DMF with $H_2O$ and a mixture of NMP with $H_2O$.

According to an embodiment of the present disclosure, reference will be made to the contents of 'https://sites.google.com/site/miller00828/in/solvent-polarity-table', 'K. Guzow et al./Spectrochemica Acta Part A 61(2005) 1133-1140' and Journal of the KIMST (Korea Institute of Military Science and Technology) Vol. 11, No. 3 (June, 2008), 'Study of Theoretical Prediction of Solvent Polarity'.

According to the present disclosure, when the ratio of polarity falls within a range of 0.360-0.450, the fluorine-based binder of the electrode adhesive layer in the separator may have a crystallinity of about 40% or more, or 50% or more, and a beta crystal content of 80% or more.

According to an embodiment of the present disclosure, the crystallinity may be determined by differential scanning calorimetry (DSC). For example, the crystallinity may be determined by applying a thermal change at a rate of 5-15°C/min. In addition, the crystallinity (%) may be calculated according to the following Formula 3:

[Formula 3]

$$\text{Crystallinity (\%)} = (\triangle Hm / \triangle H°m) \times 100$$

wherein $\triangle H°m$ represents the heat of fusion of a polymer having a crystallinity of 100%, and $\triangle Hm$ represents the heat of fusion of a polymer determined through a differential scanning calorimeter.

In addition, the beta crystal content may be calculated from the absorbance value measured through FT-IR spectroscopy according to the following Formula 4:

[Formula 4]

$$F(\beta) = \frac{A_\beta}{(K_\beta/K_\alpha)A_\alpha + A_\beta}$$

wherein each of $K_\alpha$ and $K_\beta$ represents an absorption coefficient, and $K_\alpha = 6.1 \times 10^4$ cm$^2$/mol and $K_\beta = 7.7 \times 10^4$ cm$^2$/mol.

In Formula 4, $F(\beta)$ represents the content ratio of $\beta$ crystals, $K_\alpha$ represents the absorption coefficient of $\alpha$ crystals, $K_\beta$ represents the absorption coefficient of $\beta$ crystals, $A_\alpha$ represents the absorbance of $\alpha$ crystals, and $A_\beta$ represents the absorbance of $\beta$ crystals.

According to an embodiment of the present disclosure, the absorbance value based on FT-IR spectroscopy may be measured by using Perkin-Elmer spectrum 1000 spectrometer provided with an ATR module, wherein the condition of a precision of $\pm 2$ cm$^{-1}$, 25° may be applied.

Meanwhile, it is generally known that fluorine-based polymer containing vinylidene fluoride may have $\alpha$, $\beta$ and $\gamma$ crystal structures. Particularly, $\alpha$ crystals have a molecular chain linked in a trans-gauche-trans-gauche mode, while $\beta$ crystals have an all-trans molecular chain to show the highest polarization degree of the molecular chain itself, and all molecular chains are aligned in the same direction in the crystal lattice. When $\beta$ crystals satisfy the above-defined range in the fluorine-based binder of the electrode adhesive layer, fluorine atoms having high electronegativity are aligned regularly to form an electrode adhesive layer having a uniform pore size and distribution, resulting in improvement of lithium-ion conductivity.

Next, the polymer solution is applied to one surface or both surfaces of the separator substrate layer (S2). The polymer solution may be applied by using dip coating, die coating, roll coating, comma coating or a combination thereof. Then, the coated polymer solution is dried (S3). The drying method is not particularly limited, as long as it is capable of removing the mixed solvent at least partially or totally, and any suitable method may be selected from the known methods. For example, the drying method may include at least one selected from natural drying, air blowing drying, hot air drying, cold air drying and vacuum drying. According to an embodiment of the present disclosure, the drying step may be carried out by using natural drying at room temperature or air blowing drying. In a variant, the drying step may be carried out through a hot air drying process at a temperature of higher than 30°C by using a convection oven, or the like. According to an embodiment of the present disclosure, the drying step may be carried out preferably through convection oven drying, wherein the drying temperature is controlled to a range of 50-100°C. The drying time may be controlled to a range suitable for removal of the solvent, depending on the temperature or use of air blowing.

The separator for a lithium secondary battery obtained as described above may be used as a separator for an electrochemical device. The electrochemical device includes any device which carries out electrochemical reaction, and particular examples thereof include all types of primary batteries, secondary batteries, fuel cells, solar cells or capacitors. Particularly, among the secondary batteries, lithium secondary batteries, including lithium metal secondary batteries, lithium-ion secondary batteries, lithium polymer secondary batteries or lithium-ion polymer secondary batteries, are preferred.

According to an embodiment of the present disclosure, the lithium secondary battery may be obtained by using a conventional method known to those skilled in the art. According to an embodiment of the present disclosure, the secondary battery may be obtained by interposing the separator between a positive electrode and a negative electrode to prepare an electrode assembly, introducing the electrode assembly to a battery casing, and injecting an electrolyte thereto.

According to an embodiment of the present disclosure, each electrode of the secondary battery may be obtained by allowing each electrode active material to be bound to an electrode current collector through a method generally known in the art. Among the electrode active materials, non-limiting examples of a positive electrode active material include conventional positive electrode active materials that may be used for the positive electrode for conventional electrochemical devices. Particularly, lithium intercalation materials, such as lithium manganese oxides, lithium cobalt oxides, lithium nickel oxides, lithium iron oxides or lithium composite oxides containing a combination thereof, are used preferably. Non-limiting examples of a negative electrode active material include conventional negative electrode active materials that may be used for the negative electrode for conventional electrochemical devices. Particularly, lithium intercalation materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery. According to an embodiment of the present disclosure, the electrode assembly may be applied to a battery through a separator-electrode lamination (stacking) and folding process, in addition to a conventional winding process.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Examples

Examples 1 and 2

A. Preparation of Separator Substrate Layer

First, $Al_2O_3$ powder (particle diameter 500 nm) and PVDF-HFP (Solef 21510, available from Solvay, HFP 15 wt%) as a binder polymer were introduced to NMP at a weight ratio of 20:80 (binder polymer:inorganic particles), and the inorganic particles were pulverized and dispersed by using a ball milling process at 50°C for 1 hour to prepare a slurry for forming a coating layer. Herein, the slurry was controlled to a solid content of 20 wt%. Next, a polyethylene porous polymer substrate (thickness 9 $\mu$m, air permeability 70 sec/100 mL, resistance 0.39 S2) having a size of 6 cm x 15 cm was prepared as a porous polymer substrate. The slurry was applied to both surfaces of the porous polymer substrate and dried by air blowing drying at 70°C to prepare a separator substrate layer.

B. Formation of Electrode Adhesive Layer

A first solvent and a second solvent were prepared and mixed with each other to prepare a mixed solvent. The composition of the mixed solvent is shown in the following Table 1. Next, PVDF-HFP (Solef 21510, available from Solvay) was prepared and introduced to the mixed solvent to prepare a polymer solution for forming an electrode adhesive layer. The polymer solution was applied to both surfaces of the separator substrate layer through a doctor blade coating process and dried by convection drying using a convection oven at 70°C to obtain a composite separator.

Comparative Examples 1 and 2

A separator substrate layer was obtained in the same manner as Examples. A first solvent and a second solvent were prepared and mixed with each other to prepare a mixed solvent. The composition of the mixed solvent is shown in the following Table 1. Next, PVDF-HFP (Solef 21510, available from Solvay) was prepared and introduced to the mixed solvent to prepare a polymer solution for forming an electrode adhesive layer. The polymer solution was applied to both surfaces of the separator substrate layer through a doctor blade coating process and dried by air blowing drying at 70°C to obtain a composite separator.

Comparative Example 3

A separator substrate layer was obtained in the same manner as Examples. Next, PVDF-HFP (Solef 21510, available from Solvay) was introduced to DMF to prepare a polymer solution for forming an electrode adhesive layer. The polymer solution was applied to both surfaces of the separator substrate layer through a doctor blade coating process. Then, the polymer solution was solidified by carrying out humidified separation at 100°C under a relative humidity of 30% to obtain a separator.

Determination of β Crystal Phase Ratio of Separator

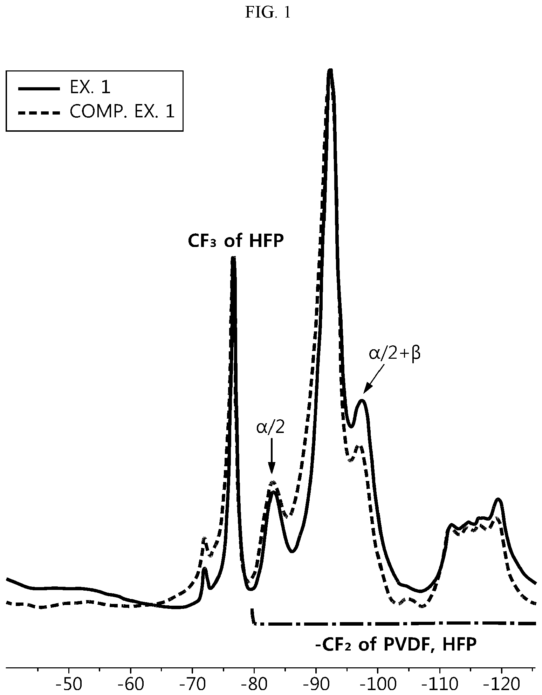

Each of the separators according to Example 1 and Comparative Example 1 was analyzed by FT-IR to measure the absorbance. The absorbance measurement was applied to the above Formula 4 to calculate the β crystal phase ratio. The results are shown in FIG. 1 in the form of a graph. Referring to FIG. 1, it can be seen that Example 1 in which the ratio of polarity of (first solvent)/(second solvent) is 0.360 or more shows a higher β crystal phase ratio as compared to Comparative Example 1.

Herein, the β crystal phase ratio is calculated by using FT-IR spectroscopy (Perkin-Elmer) to measure the absorbance in an ATR (diamond crystal) mode.

Observation of Separator Surface

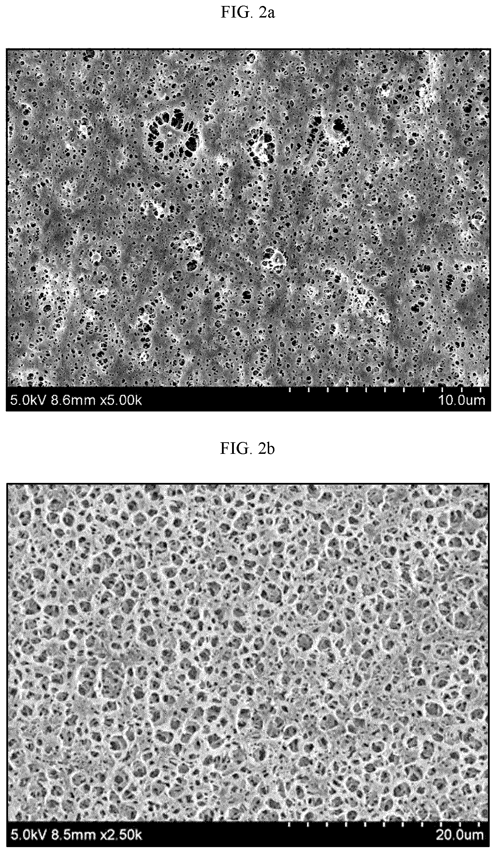

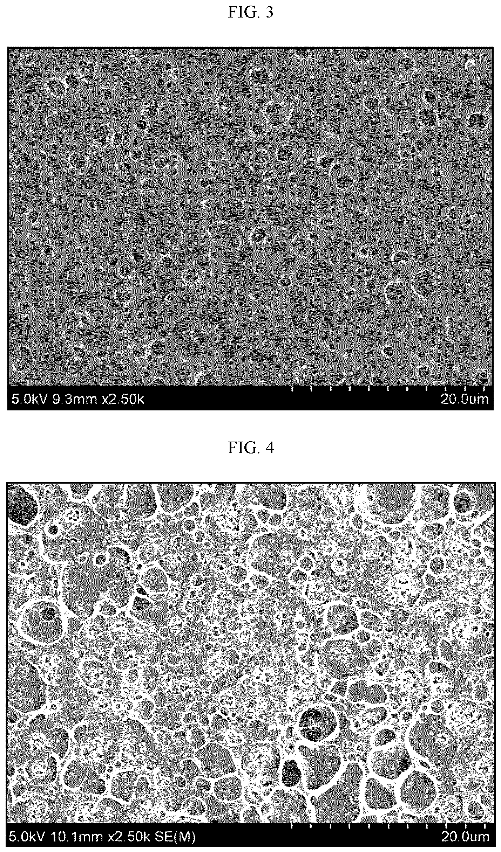

FIGS. 2a and 2b are scanning electron microscopic (SEM) images illustrating the surface of the separator according to Example 1, and FIG. 3 is an SEM image illustrating the surface of the separator according to Comparative Example 1. In addition, FIG. 4 is an SEM image illustrating the surface of the separator according to Comparative Example 3. Referring to FIGS. 2a-4, it can be seen that the separator according to Example 1 has a lot of small micropores, which advantageously affects the resistance. On the contrary, each of the separators according to Comparative Examples 1 and 3 has relatively large pores distributed randomly therein. In addition, as can be seen from the test as described hereinafter, such large pores distributed randomly in the separator adversely affect the resistance.

Manufacture of Mono-Cell and Determination of Resistance

An artificial graphite as a negative electrode active material, Denka black as a conductive material and polyvinylidene fluoride (PVDF) as a binder were mixed at a weight ratio of 75:5:25, and N-methyl pyrrolidone (NMP) as a solvent was added thereto to prepare a negative electrode slurry. The negative electrode slurry was coated and dried on a copper current collector to prepare a negative electrode having a negative electrode active material layer formed thereon.

In addition, $LiNi_{0.8}Co_{0.1}Mn_{0.1}O_2$ as a positive electrode active material, Denka black as a conductive material and polyvinylidene fluoride (PVDF) as a binder were added to N-methyl pyrrolidone (NMP) as a solvent at a weight ratio of 85:5:15 to prepare a positive electrode active material slurry. The positive electrode active material slurry was coated and dried on a sheet-like aluminum current collector to prepare a positive electrode having a positive electrode active material layer formed thereon.

Each of the separators according to Examples and Comparative Examples was interposed between the positive electrode and the negative electrode prepared as described above to form an electrode assembly, and an electrolyte was injected thereto to obtain a 50 mAh mono-cell. The electrolyte was prepared by dissolving $LiPF_6$ in a solvent containing ethylene carbonate and ethyl methyl carbonate mixed at a volume ratio of 7:3 at a concentration of 0.7 M. The resistance of each mono-cell was measured by using a Marco charger under the conditions of SOC 50% and 2.5 C-rate pulse.

[Table 1]

| | Comp. Ex. 1 | Ex. 1 | Ex. 2 | Comp. Ex. 2 |
|---|---|---|---|---|
| First solvent (polarity) | THE (0.207) | DMF (0.386) | NMP (0.404) | Acetone (0.355) |
| Second solvent (polarity) | $H_2O$ (1) | $H_2O$ (1) | $H_2O$ (1) | $H_2O$ (1) |
| Ratio of polarity | 0.207 | 0.386 | 0.404 | 0.355 |
| Beta crystal ratio of electrode adhesive layer (%) | 65% | 82% | 87% | 76% |
| Thickness of composite separator (um) | 15um | 15um | 15um | 15um |
| Air permeability (sec/100mL) | 1,230 | 163 | 118 | 227 |
| Resistance of separator (Ω) | 1.3 | 0.8 | 0.7 | 0.9 |
| Mono-cell resistance (S2) 2.5 C, 10 sec, pulsed discharge resistance, room temperature | - | 1.10 | 1.06 | 1.24 |

Method for Determination of Resistance

Each of the separators obtained from Examples and Comparative Examples was interposed between SUS sheets to form a coin cell. To prepare an electrolyte for the coin cell, ethylene carbonate and ethyl methyl carbonate were mixed at a volume ratio of 1:2, and $LiPF_6$ was added thereto at a concentration of 1 M. Each coin cell was determined in terms of electrical resistance by using a resistance analyzer (VMP3, Biologic science instrument) at 25°C with an amplitude of 10 mV and a scan range of 0.1 Hz to 1 MHz through electrochemical impedance spectroscopy.

Method for determination of Air Permeability

The air permeability was determined as time required for 100 mL of air to pass through each of the separators according to Examples and Comparative Examples. The air permeability was determined according to the method of JIS P8117. The air permeability of the porous substrate was also determined based on the same method.

**Claims**

1. A method for manufacturing a separator for an electrochemical device which is a composite separator having an electrode adhesive layer, the method comprising a step of applying a polymer solution for an electrode adhesive layer to at least one surface of a separator substrate layer, followed by drying,

   wherein the polymer solution comprises a binder resin for an electrode adhesive layer and a mixed solvent, the binder resin for an electrode adhesive layer comprises a fluorine-based binder resin,
   the mixed solvent comprises a first solvent and a second solvent, the ratio of the polarity of the first solvent to the polarity of the second solvent (polarity of the first solvent/polarity of the second solvent) is 0.360 or more, and each of the polarity of the first solvent and the polarity of the second solvent independently follows the Dimroth-Reichardt ET30 polarity scale.

2. The method for manufacturing a separator for an electrochemical device according to claim 1, wherein each of the polarity of the first solvent and the polarity of the second solvent is an $E_T^N$ value independently calculated from the following Formula 1 and Formula 2:

$$[\text{Formula 1}]$$

$$E_T(A) = 28,592 \,/\, \lambda_{max}$$

$$[\text{Formula 2}]$$

$$E_T^N = [E_T(A) - E_T(TMS)] \,/\, [E_T(H_2O) - E_T(TMS)]$$

wherein $E_T(A)$ is expressed in the unit of kcal/mol, $E_T(H_2O)$ is 63.1 kcal/mol, and $E_T(TMS)$ is 30.7 kcal/mol.

3. The method for manufacturing a separator for an electrochemical device according to claim 1, wherein the first solvent comprises any one selected from acetone, tetrahydrofuran (THF), dimethylformamide (DMF), N-methyl pyrrolidone (NMP), or a mixture of two or more of them, and the second solvent comprises any one selected from a C1-C3 lower alcohol and $H_2O$, or a mixture of two or more of them.

4. The method for manufacturing a separator for an electrochemical device according to claim 1, wherein the ratio of the polarity of the first solvent to the polarity of the second solvent is 0.360-0.450.

5. The method for manufacturing a separator for an electrochemical device according to claim 1, wherein the fluorine-based binder resin is present in an amount of 90 wt% or more based on 100 wt% of the binder resin for an electrode adhesive layer.

6. The method for manufacturing a separator for an electrochemical device according to claim 1, wherein the fluorine-based binder resin comprises vinylidene fluoride homopolymer (polyvinylidene fluoride), copolymer of vinylidene fluoride with a copolymerizable monomer, or a mixture thereof.

7. The method for manufacturing a separator for an electrochemical device according to claim 6, wherein the copolymer of vinylidene fluoride with a copolymerizable monomer is at least one selected from polyvinylidene fluoride-co-hexafluoropropylene, polyvinylidene fluoride-co-trichloroethylene, polyvinylidene fluoride-co-tetrafluoroethylene and polyvinylidene fluoride-co-trifluoroethylene.

8. The method for manufacturing a separator for an electrochemical device according to claim 6, wherein the copolymer of vinylidene fluoride with a copolymerizable monomer has a degree of substitution with the copolymerizable monomer of 5-20 wt%.

9. A separator for an electrochemical device which is obtained by the method as defined in claim 1, wherein the fluorine-based binder in the electrode adhesive layer has a crystallization degree of 40% or more and a content of beta crystals of 80% or more.

10. A lithium-ion secondary battery comprising a negative electrode, a positive electrode and a separator interposed between the negative electrode and the positive electrode, wherein the separator is the same as defined in claim 9.

FIG. 1

FIG. 2a

5.0kV 8.6mm x5.00k        10.0um

FIG. 2b

5.0kV 8.5mm x2.50k        20.0um

FIG. 3

5.0kV 9.3mm x2.50k                                    20.0um

FIG. 4

5.0kV 10.1mm x2.50k SE(M)                             20.0um

## INTERNATIONAL SEARCH REPORT

| | International application No. |
|---|---|
| | **PCT/KR2021/020226** |

### A. CLASSIFICATION OF SUBJECT MATTER

**H01M 50/403**(2021.01)i; **H01M 50/46**(2021.01)i; **H01M 50/426**(2021.01)i; **H01M 10/052**(2010.01)i

According to International Patent Classification (IPC) or to both national classification and IPC

### B. FIELDS SEARCHED

Minimum documentation searched (classification system followed by classification symbols)

H01M 50/403(2021.01); C09J 201/00(2006.01); H01M 10/052(2010.01); H01M 10/0525(2010.01); H01M 10/058(2010.01); H01M 10/40(2006.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 접착층(adhesive layer), 용매(solvent), 극성도(polarity)

### C. DOCUMENTS CONSIDERED TO BE RELEVANT

| Category* | Citation of document, with indication, where appropriate, of the relevant passages | Relevant to claim No. |
|---|---|---|
| A | KR 10-2015-0064438 A (SAMSUNG SDI CO., LTD.) 11 June 2015 (2015-06-11)<br>See paragraphs [0035]-[0063]. | 1-10 |
| A | KR 10-2013-0118835 A (LG CHEM, LTD.) 30 October 2013 (2013-10-30)<br>See paragraphs [0024]-[0042]. | 1-10 |
| A | JP 11-121047 A (ALCATEL CIT) 30 April 1999 (1999-04-30)<br>See claims 1-2 and 8. | 1-10 |
| A | KR 10-2001-0024717 A (MITSUBISHI ELECTRIC CORPORATION et al.) 26 March 2001 (2001-03-26)<br>See claims 1 and 5. | 1-10 |
| A | KR 10-2017-0024574 A (LG CHEM, LTD.) 07 March 2017 (2017-03-07)<br>See claim 11. | 1-10 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 April 2022** | **19 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2021/020226** |

| Patent document cited in search report | | | Publication date (day/month/year) | Patent family member(s) | | | Publication date (day/month/year) |
| --- | --- | --- | --- | --- | --- | --- | --- |
| KR | 10-2015-0064438 | A | 11 June 2015 | KR | 10-1688010 | B1 | 03 January 2017 |
| | | | | KR | 10-2015-0106818 | A | 22 September 2015 |
| | | | | WO | 2015-084053 | A1 | 11 June 2015 |
| KR | 10-2013-0118835 | A | 30 October 2013 | CA | 2858735 | A1 | 24 October 2013 |
| | | | | CA | 2858735 | C | 04 October 2016 |
| | | | | CN | 103843171 | A | 04 June 2014 |
| | | | | CN | 103843171 | B | 07 December 2016 |
| | | | | EP | 2840628 | A1 | 25 February 2015 |
| | | | | EP | 2840628 | A4 | 11 May 2016 |
| | | | | EP | 2840628 | B1 | 29 November 2017 |
| | | | | JP | 2014-526776 | A | 06 October 2014 |
| | | | | JP | 6208663 | B2 | 04 October 2017 |
| | | | | KR | 10-1488829 | B1 | 04 February 2015 |
| | | | | US | 2014-0178740 | A1 | 26 June 2014 |
| | | | | US | 9853268 | B2 | 26 December 2017 |
| | | | | WO | 2013-157902 | A1 | 24 October 2013 |
| JP | 11-121047 | A | 30 April 1999 | CA | 2242580 | A1 | 17 January 1999 |
| | | | | DE | 69812786 | T2 | 04 March 2004 |
| | | | | EP | 0892453 | A1 | 20 January 1999 |
| | | | | EP | 0892453 | B1 | 02 April 2003 |
| | | | | FR | 2766296 | A1 | 22 January 1999 |
| | | | | FR | 2766296 | B1 | 20 August 1999 |
| | | | | US | 6290733 | B1 | 18 September 2001 |
| | | | | US | 6660435 | B1 | 09 December 2003 |
| KR | 10-2001-0024717 | A | 26 March 2001 | EP | 1043796 | A1 | 11 October 2000 |
| | | | | EP | 1043796 | A4 | 02 May 2003 |
| | | | | JP | 3474853 | B2 | 08 December 2003 |
| | | | | KR | 10-1998832 | B1 | 27 September 2019 |
| | | | | US | 6692543 | B1 | 17 February 2004 |
| | | | | WO | 99-31749 | A1 | 24 June 1999 |
| KR | 10-2017-0024574 | A | 07 March 2017 | CN | 108260363 | A | 06 July 2018 |
| | | | | CN | 108260363 | B | 01 February 2022 |
| | | | | JP | 2018-530860 | A | 18 October 2018 |
| | | | | JP | 6764468 | B2 | 30 September 2020 |
| | | | | KR | 10-1998832 | B1 | 27 September 2019 |
| | | | | US | 10777801 | B2 | 15 September 2020 |
| | | | | US | 2018-0123106 | A1 | 03 May 2018 |
| | | | | WO | 2017-034353 | A1 | 02 March 2017 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020200185814
- KR 1020040070096
- KR 1020060116043

### Non-patent literature cited in the description

- **K. GUZOW et al.** *Spectrochemica Acta Part A,* 2005, vol. 61, 1133-1140
- Study of Theoretical Prediction of Solvent Polarity. *Journal of the KIMST (Korea Institute of Military Science and Technology),* June 2008, vol. 11 (3